# EUROPEAN PATENT APPLICATION

(11) **EP 2 116 956 A1**
(43) Date of publication of application: **11.11.2009**
(21) Application number: 08703800.6
(22) Date of filing: 24.01.2008
(51) Int. Cl.: G06F 21/24, H04L 9/08

(54) **CONFIDENTIAL INFORMATION DISTRIBUTION SYSTEM AND CONFIDENTIAL INFORMATION DISTRIBUTION METHOD**

(30) Priority: 05.02.2007 JP 2007025442
(71) Applicant: Senken Co., Ltd., Tokyo 104-0061 (JP)
(72) Inventor: KATO, Hisao, Tokyo 104-0061 (JP)
(74) Representative: Müller, Gerald Christian
(86) International application number: PCT/JP2008/050972
(87) International publication number: WO 2008/096608

(57) **Abstract**

To prevent information leakage at the time of transferring secret information data stored by using secret sharing scheme to the outside.

Data to be transferred to a delivery destination of secret information data is divided into a plurality of data pieces by using the secret sharing scheme, and a part of the data pieces is stored in a portable storage medium by a data delivery source and is delivered to the data delivery destination by means such as a package delivery service. A computer at the data delivery destination accesses a predetermined website to download the other data pieces. A computer at the data delivery destination restores the original secret information data from the data pieces obtained via such two kinds of routes.

## Description

### Technical Field

The present invention relates to a secret information delivery system and a secret information delivery method for dividing original data by the secret sharing scheme, delivering divided data pieces via different routes, and restoring the original data at a delivery destination.

### Background Art

At the time of storing secret information, it is requested to sufficiently consider confidentiality. Various methods for the purpose are devised. For example, in the method disclosed in Japanese Unexamined Patent Application Publication No. 2004-145755 (patent document 1), in the case of storing data to be confidential, original data is not simply encrypted but is subjected to secret sharing, and the resultant data is stored. From the data dispersedly stored, the original data can be restored.

The technique described in the patent document 1, however, focuses on protection of secret information and does not pay attention to a method of utilizing the protected information and convenience. The document does not describe a use method at the user level of how the user accesses strictly protected information and utilizes it for his/her work.
Consequently, the applicant of the present invention has proposed a technique, in Japanese Unexamined Patent Application Publication No. 2006-189925 (patent document 2), of realizing easy utilization of information while assuring confidentiality of information by using the secret sharing scheme.

Outline of the invention in the patent document 2 (hereinbelow, "prior art") will be described below. In the invention, the usability for the user is made excellent by properly handling information according to a protection level of each of data items constructing the information. However, the precondition of the present invention is management of secret information data by the secret sharing scheme without particularly playing importance on the concept of the protection level. Therefore, in the following description related to the prior art, the protection level will not be described.

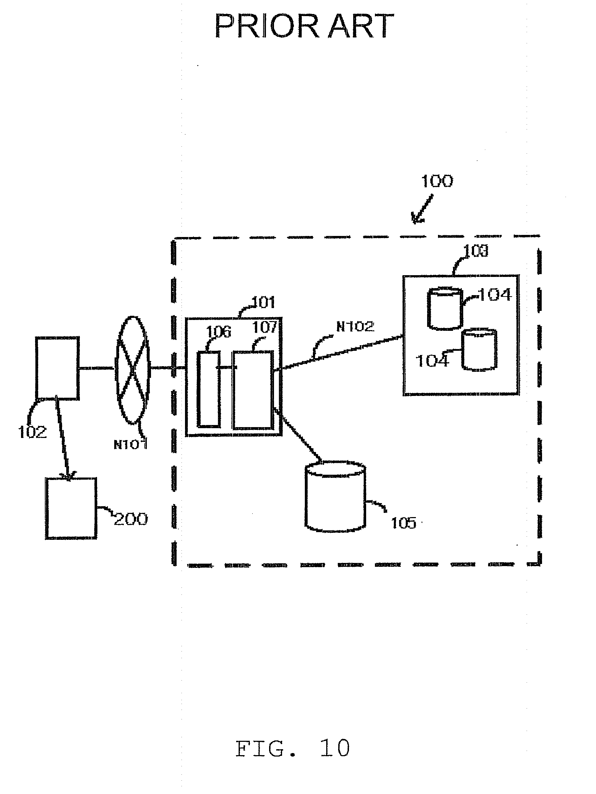

FIG. 10 shows a system configuration of the conventional art.
A secret information management apparatus 101 is connected to a user terminal 102 via a communication network N101 such as the Internet. The secret information management apparatus 101 is connected to a secret information data dispersion management server 103 (hereinbelow, "dispersion management server 103") via a communication network N102. The dispersion management server 103 has a plurality of storage media 104 for storing some data pieces obtained by dividing original data.

Further, the secret information management apparatus 101 can access a keyword management database 105 for search (hereinbelow, "keyword management DB 105"). The keyword management DB 105 may be stored in an internal storage device in the secret information management apparatus 101 or an external storage device, or stored in a storage device of a database server as a computer different from the secret information management apparatus 101.

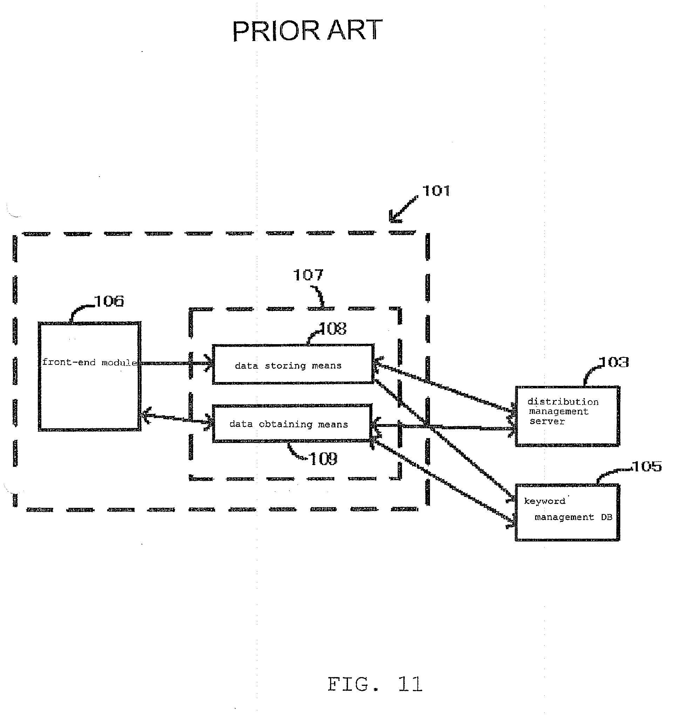

The software configuration of the secret information management apparatus 101 will be described with reference to FIG. 11.
A front-end module 106 is software for accepting an input from the user terminal 102 and performing a work process handling secret information. The front-end module 106 has business logics and a user interface according to work requirements. A back-end module 107 performs data storing/obtaining process in place of the front-end module 106 when the front-end module 106 has to store/obtain data, and transmits/receives data to/from the dispersion management server 103 and the keyword management DB 105 via an interface (not shown).

Since the back-end module 107 performs data management considering confidentiality protection, the front-end module 106 does not have to be conscious of protection of information.
The back-end module 107 has data storing means 108 and data obtaining means 109.
It can be considered that the secret information management apparatus 101 having such a configuration plays the role of a system management server in a secret information management system 100 including the dispersion management server 103 and the keyword management DB 105.

Desirably, individual specification information such as name by which an individual can be specified does not become a key of search or extraction under control of the dispersion management server 103. However, depending on a work process, there is a case that a search has to be made with individual specification information. Consequently, an attribute value is stored in the keyword management DB 105 in addition to the dispersion management server 103 to enable a unique search. Since it is a problem to use an attribute value as it is, that is, a plain sentence from the viewpoint of security, the attribute value is processed to a one-way hash value that can be irreversible, and the one-way hash value is stored.

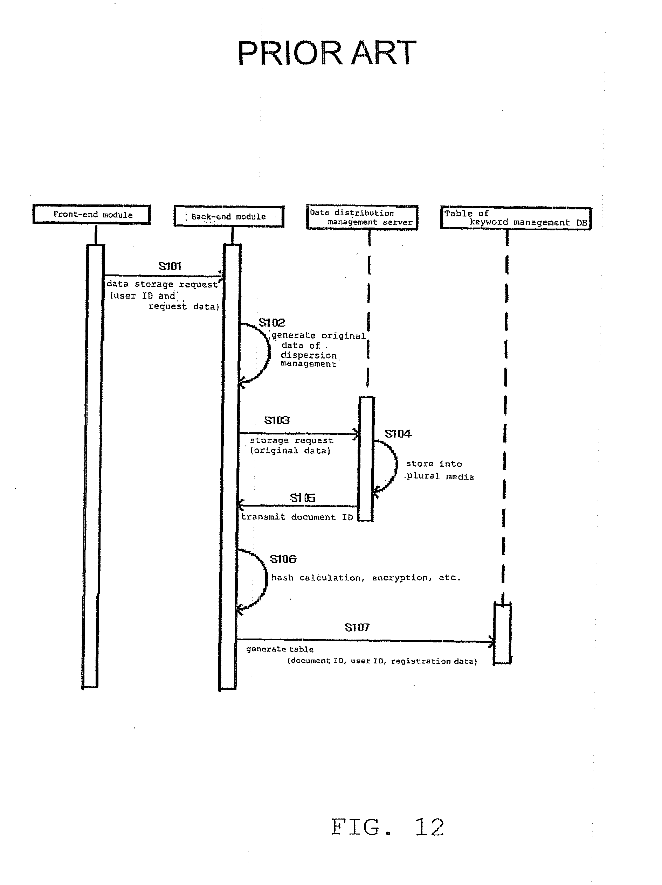

Next, the operation of the back-end module 107, particularly, the data storing means 108 in the case where a data storing request is newly sent from the front-end module 106 will be described with reference to FIG. 12.

The front-end module 106 specifies information to be stored and a user ID and sends a data storage request from the front-end module 106 to the back-end module 107 (step S101).
The back-end module 107 adds the user ID to information to be stored, thereby generating data in a predetermined format (step S102). The generated data is original data to be divided and stored by the dispersion management server 103. On receipt of the storage request (step S103), the dispersion management server 103 divides the original data by a predetermined known method and stores the divided data into the plurality of storage media 104 (step S104). At this time, the dispersion management server 103 generates a document ID as information for restoring the divided data. After completion of storage of the divided data and generation of the document ID, the dispersion management server 103 transmits the document ID to the back-end module 107 (step S105). After that, by transmitting the document ID to the dispersion management server 103, the back-end module 107 can obtain the divided and stored data.

Next, the back-end module 107 has to register a table associated with the divided and stored data into the keyword management DB 105. Consequently, an attribute value is assigned for a predetermined hash function to calculate a hash value, or encryption is performed (step S106). To each of attribute values hashed or the like, a document ID and a user ID are added, and the resultant is registered in the keyword management DB 105 (step S107).

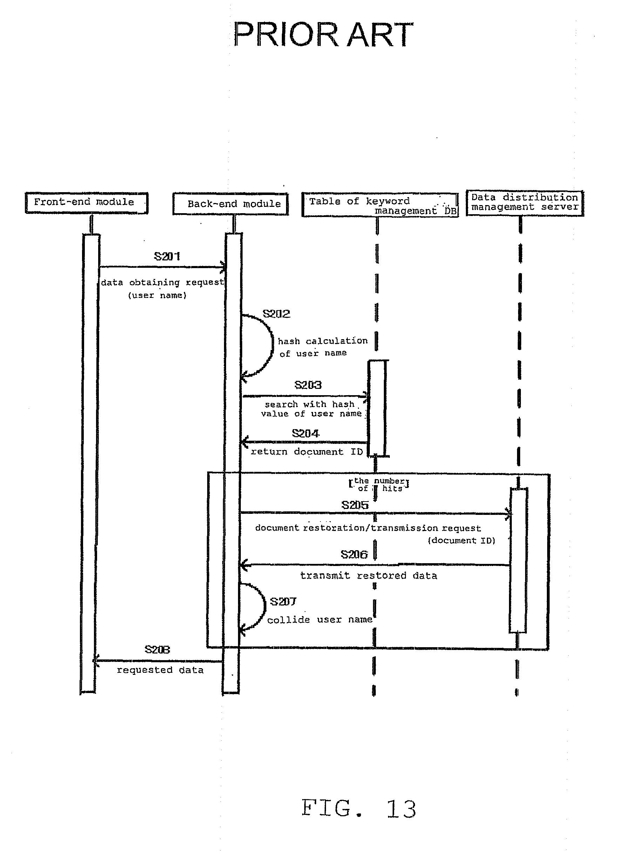

With reference to FIG. 13, the operation of the back-end module 107, particularly, the data obtaining means 109 in the case where a data acquisition request is received from the front-end module 106 will be described.
A data acquisition request designating a user name is transmitted from the front-end module 106 to the back-end module 107 (step S201).
The back-end module 107 hashes the designated user name (step S202) and searches the keyword management DB 105 with the hash value (step S203). When the hash value matches, a document ID is extracted (step S204). Next, when the back-end module 107 transmits the document ID to the dispersion management server 103 and requests for restoration and transmission of the document (step S205), the dispersion management server 103 transmits restored data (step S206).

The back-end module 107 matches the user name included in the transmitted restored data with a user name specified by the front-end module 106 (step S207). When the user names match each other, the back-end module 107 sends data to the front-end module 106 (step S208).
Even when the user names are different from each other, as a result of the hash calculation, there is a case that the hash values are the same. In this case, a plurality of document IDs are returned in step S204, until data whose user names match each other is found, the processes in steps S205 to S207 are repeated.

Generally, the original data is strongly protected by being dispersedly managed. However, since secret information data is spread to a plurality of media, basically, only a search with information for decoding (hereinbelow, "index key for decoding") can be performed. Consequently, usually, a search with secret information (for example, name) cannot be performed. However, in the prior art, information which can be a search keyword (for example, a user name) and an index key for decoding (corresponding to a document ID) are associated with each other and managed by different storage media. In such a manner, dispersed information can be restored as necessary and utilized.

Patent document 1: Japanese Unexamined Patent Application Publication No. 2004-145755
Patent Document 2: Japanese Unexamined Patent Application Publication No. 2006-189925

### Disclosure of the Invention

### Problems to be solved by the Invention

However, although the invention described in the patent document 2 has an advantage that information dispersion-stored safely and reliably can be easily utilized, prevention of information leakage at the time of transmitting information to the outside is not considered.
For example, in the case where the user terminal 102 receives secret information data transmitted from the secret information management apparatus 101 side, if a measure such as encryption is performed in the communication line N101, security between the user terminal 102 and the secret information management system including the secret information management apparatus 101 is assured. However, in the case of transmitting secret information from the user terminal 102 to another terminal 200, if a proper measure is not taken, there is the possibility that the secret information leaks when the data is stolen or lost. The issue is, not theft or loss of data itself, but that data stolen or lost is read by an outsider. If the secret information data is easily read by someone else, protection using the secret sharing scheme is useless.

In consideration of the problems, an object of the present invention is to realize safe information delivery to the outside by providing a mechanism of eliminating possibility that data which is stolen or lost is read at the time of transmitting secret information data to the outside.

### Means for Solving the Problems

To achieve the object, the present invention employs the following configurations.
A secret information delivery system of claim 1 includes: a secret information management system for dividing secret information data into data pieces by a secret sharing scheme, storing the data pieces, and performing a process of restoring the original secret information data from the data pieces; a data delivery source terminal for managing delivery of the secret information data stored in the secret information management system to a data delivery destination; and a data delivery destination terminal for obtaining and restoring the data pieces of the secret information data stored in the secret information management system. The secret information management system includes a system pre-server. The system pre-server has at least: data extracting/re-dividing means, on receipt of a secret information extraction request from the data delivery source terminal, restoring data dispersedly stored in the secret information management system, combining one or more data pieces restored to generate information data to be delivered, and dividing the information data to be delivered into two or more data pieces on the basis of the secret sharing scheme; data piece delivering means for transmitting a part of a group of data pieces constructing the information data to be delivered to the data delivery source terminal, and uploading the remaining data pieces to a web site dedicated to downloading; and mail generating/transmitting means for transmitting an electronic mail that notifies of URL of the web site dedicated to downloading to the data delivery destination terminal. The data delivery source terminal includes at least: input means; screen displaying means; communication interface means for connection to the system pre-server via a communication network; storage medium interface means for connection to a portable storage medium having a nonvolatile area; data extraction requesting means for requesting the system pre-server for information data to be delivered; and data piece writing means for writing a data piece sent from the system pre-server to the nonvolatile area in the portable storage medium. The data delivery destination terminal includes: input means; screen displaying means; communication interface means for connection to the Internet; storage medium interface means for connection to the portable storage medium; URL extracting means for receiving an electronic mail transmitted from the system management server and extracting the URL of the web site dedicated to downloading; data piece obtaining means for accessing the predetermined site via the Internet and downloading a data piece; and data restoring means for reading a data piece stored in the nonvolatile area in the portable storage medium and restoring the original information data to be delivered from the read data piece and the downloaded data piece.

With the configuration, the original secret information data is divided into a plurality of data pieces, and the data pieces are delivered to the delivery destination via different routes. Even if any of the data pieces is missing, stolen, or the like, the original data cannot be restored from one data piece, the secret information can be protected at an extremely high level.

In the present invention, the "secret information" denotes general information including information to be confidential represented by confidential information.
Therefore, it is not limited to confidential information in narrow sense (name, address, telephone, mail address, place of work, and the like).
The term "secret sharing scheme" has meaning typified by a method of dividing data and storing divided data and may be called another method as long as it is a method of dividing data and storing divided data from a part of which, the original data cannot be restored.
The "data delivery source" denotes a person/company who can receive service provided by the secret information management system under a contract or the like. For example, in the case where so-called a name-list seller uses the secret information management system to safely store secret information collected by itself as if it deposits valuables with a safe-deposit box, the name-list seller is a "data delivery source". The "data delivery destination" may be a company which intends to purchase secret information from the data delivery source for a purpose such as dispatch of direct mails.
The "information to be delivered" denotes secret information data which is provided from the data delivery source to the data delivery destination. In the present invention, information to be delivered itself is not delivered to the data delivery destination but is divided into two or more pieces and the divided pieces of information are delivered via different two routes. The pieces of information are called "data pieces".

In claim 2, the secret information delivery system according to claim 1 is characterized in that, to an electronic mail transmitted from the systempre-server to the data delivery destination terminal, an encrypted file in which the URL of the web site dedicated to downloading and a password necessary to access the dedicated web site are written is attached.
With the configuration, the secret information management system notifies only the delivery destination of the URL of a download site and a password necessary to access the site. It is therefore difficult for a third party other than the delivery destination to download the data pieces from the site.

In claim 3, the secret information delivery system according to claim 1 or 2 is characterized in that after a part of the group of data pieces obtained by dividing the information data to be delivered is transmitted to the data delivery source terminal, the system pre-server generates a spare data piece group by re-dividing the information data to be delivered. With the configuration, even when original data cannot be restored due to loss of a data piece, by delivering a spare data piece by a similar method, the original data can be restored.

In claim 4, the secret information delivery system according to any one of claims 1 to 3 is characterized in that the portable storage medium is a USB memory including a nonvolatile area, a volatile area, and an invisible area.
With the configuration, one USB memory can have both of the functions of a hard disk and a memory. The areas can be flexibly used according to kinds of data.

In claim 5, the secret information delivery system according to claim 4 is characterized in that the data restoring means is realized by loading a restoration program stored in the nonvolatile area to the volatile area and executing the restoration program, and the data restoring means restores, on the volatile area, the original information data to be delivered from a data piece downloaded from the dedicated web site and a data piece stored in the nonvolatile area.
With the configuration, the data restoring process can be executed in the USB memory, so that data pieces obtained via the delivery source does not have to be sent to the outside of the USB memory. Consequently, security is assured.

In claim 6, the secret information delivery system according to claim 4 or 5 is characterized in that the portable storage medium has a function of a USB key.
With the configuration, a delivery source terminal and a delivery destination terminal can be made thin clients, and security can be assured.

Claim 7 relates to a secret information delivery method for making a computer in a data delivery source handling secret information data and capable of accessing a secret information management system that manages dispersed secret information on the basis of a secret sharing scheme and receiving service provided by the system, safely deliver secret information data requested by a data delivery destination to a computer in the data delivery destination. When the computer in the delivery source accesses the secret information management system and requests for extraction of secret information data to be delivered to the computer in the delivery destination, the secret information management system extracts the requested secret information data, divides it into two or more data pieces, transmits a part of the divided data pieces to the computer in the delivery source, and transmits an electronic mail for notifying of URL of a web site dedicated to download the remaining data pieces, to the computer in the delivery destination. On the other hand, the computer in the delivery source records the data transmitted from the secret information management system to a portable storage medium, and the computer in the delivery destination accesses the dedicated web site with the URL notified by the electronic mail, downloads the remaining information data, and restores the original secret information data from the downloaded data piece and the data piece recorded on the portable storage medium in a state where the computer is connected to the portable storage medium.

### Effect of the Invention

According to the present invention, secret information data is divided, the divided data pieces are delivered via different routes, and the original data is restored at a delivery destination. Moreover, if all of divided information pieces, that is, data pieces are not prepared, the original secret information data cannot be restored. Since readability is eliminated, even if a part of data pieces is stolen or missing during delivery, the information is not leaked. Therefore, an inconvenience such that secret information is leaked at the time of delivery to the outside although the secret information is stored carefully by the secret sharing scheme can be avoided.

### Best Mode for carrying out the Invention

### 1. System Configuration

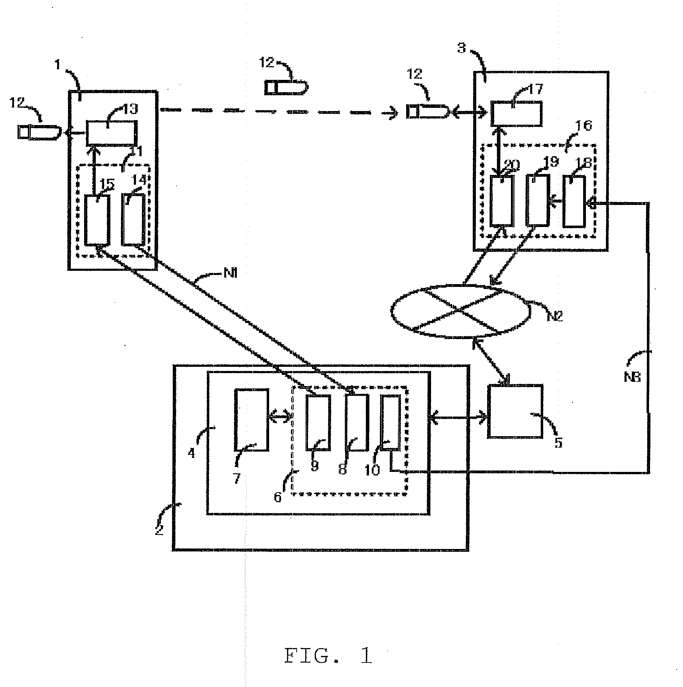

FIG. 1 shows a system configuration of an embodiment of the present invention.
Main components of the embodiment are a data delivery source terminal 1, a secret information management system 2, and a data delivery destination terminal 3. As the secret information management system 2, a service system called the secret sharing scheme or multiple sharing scheme is used. An example of such a system is Secured Archive as the secret sharing service provided by NTT Communications Corporation.

A system pre-server 4 receives a request from the data delivery source terminal 1 and performs a requested process in the secret information management system 2. The secret information management system 2 corresponds to the system 100 in the prior art shown in FIG. 10, so that the system pre-server 4 corresponds to the secret information management apparatus 101 in FIG. 10. The secret information management system 2 includes components corresponding to the dispersion management server 103 and the keyword management DB 105 in FIG. 10 in order to dispersedly manage information. In the following description, those components will not be mentioned and the function of the secret information management system 2 is regarded the same as that of the system pre-server 4.
The system pre-server 4 can be connected to a web server that opens a web site 5 dedicated to downloading. The system pre-server 4 and the web server may be the same computer.

The data delivery source terminal 1 can be connected to the system pre-server 4 via a communication network N1.
The data delivery destination terminal 3 can access the web site via Internet N2 and receive an electronic mail from the system pre-server 4 via a communication network N3.

The data delivery source terminal 1 is a terminal of the user of the secret information management system 2 which receives services of storage and acquisition of secret information data by using the secret information management system 2. When a request for providing secret information data handled by the user is received from a customer, the user extracts the secret information data from the secret information management system 2 and provides it to the customer. A terminal of the customer is the data delivery destination terminal 3. That is, the data delivery source terminal 1 corresponds to the user terminal 102 in the prior art shown in FIG. 10, and the data delivery destination terminal 3 corresponds to a terminal 200 of another person in FIG. 10.

The system pre-server 4 includes a processing unit 6, a storing unit 7, and not-shown communication interface means.
The processing unit 6 includes data extracting/re-dividing means 8, data piece delivering means 9, and mail generating/transmitting means 10.
The data extracting/re-dividing means 8 performs a process of extracting information data to be delivered which is requested to be extracted by the data delivery source terminal 1 and dividing the information data into two or more data pieces on the basis of the secret sharing scheme.
The data piece delivering means 9 performs a process of transmitting a part of the data pieces constructing the information data to be delivered to the data delivery source terminal 1 and uploading the remaining data pieces to the web site 5.
The mail generating/transmitting means 10 performs a process of transmitting an electronic mail notifying of the URL of the web site 5 dedicated to downloading to the data delivery destination terminal 3. The actions of the means will be described specifically later.
Each of the means of the processing unit 6 is realized by, mainly, executing a necessary computer program by a not-shown CPU.

The storing unit 7 stores a computer program for making each of the means of the processing unit 6 realize its function, intermediate data obtained in a process of executing the program, history of process requests from the data delivery source terminal 1, and the like.

The data delivery source terminal 1 includes a processing unit 11 and storage medium interface means 13 for establishing a communication with a portable storage medium 12.
The processing unit 11 includes data extraction requesting means 14 and data piece writing means 15.
The data extraction requesting means 14 performs a process of requesting the system pre-server 4 to extract information data to be provided to the data delivery destination.
The data piece writing means 15 performs a process of downloading a data piece from the system pre-server 4 and writing it to the portable storage medium 12. Each of the means of the processing unit 11 is realized by, mainly, executing a necessary computer program by a not-shown CPU. The action of each of the means will be described specifically later.
The data delivery source terminal 1 has, in addition, input means such as a keyboard and a mouse which are not shown, screen display means, and communication interface means for transmitting/receiving data to/from the system pre-server 4 and the like via the communication means N1.

The data delivery destination terminal 3 includes a processing unit 16, storage medium interface means 17 for establishing communication with the portable storage medium 12, and communication interface means (not shown) for connection to the communication networks N2 and N3.
The processing unit 16 includes URL extracting means 18, data piece obtaining means 19, and data restoring means 20.
The URL extracting means 18 performs a process of receiving an electronic mail sent from the system pre-server 4 and extracting the URL of the web site 5 dedicated to downloading.
The data restoring means 20 performs a process of restoring the original information data to be delivered from the downloaded data piece and a data piece stored in the portable storage medium 12.
Each of the means of the processing unit 16 is realized by, mainly, executing a necessary computer program by a not-shown CPU. The action of each of the means will be described specifically later. The data restoring means 20 may be realized by executing a program stored in the portable storage medium 12 in the portable storage medium 12.
The data delivery destination terminal 3 has, in addition, input means such as a keyboard and a mouse which are not shown, screen display means, and the like.

In the system, the portable storage medium 12 is connected to the data delivery source terminal 1, and a part of data pieces is written. The portable storage medium 12 is sent to the data delivery destination using a delivery-guaranteed package delivery service. The data delivery destination terminal 3 is connected to the portable storage medium 12 and reads the data pieces.
Any portable storage medium such as hard disk, flexible disk, MO, or the like may be used. From the viewpoint of security, it is desirable to use a USB memory dedicated to the embodiment as described below.

The dedicated USB memory is constructed by three areas; an invisible area, a nonvolatile area, and a volatile area. The nonvolatile area is an area in which written data can be held even when the USB memory is not attached to the computer, that is, when no power is supplied. The data delivery source terminal 1 writes a downloaded data piece into the area. The volatile area is an area in which data cannot be held when no power is supplied. A data piece downloaded by the data delivery destination terminal 3 is written in the area. When there is no power supply, the data in the area is cleared without manpower. The data written in the invisible area can be referred to only by dedicated software or hardware. Consequently, the invisible area is suitable as an area for writing information which becomes insignificant when altered, for example, operation history information. That is, it is sufficient to properly use the areas in the dedicated USB memory in accordance with the natures of data.

### 2. Outline of Operation of System

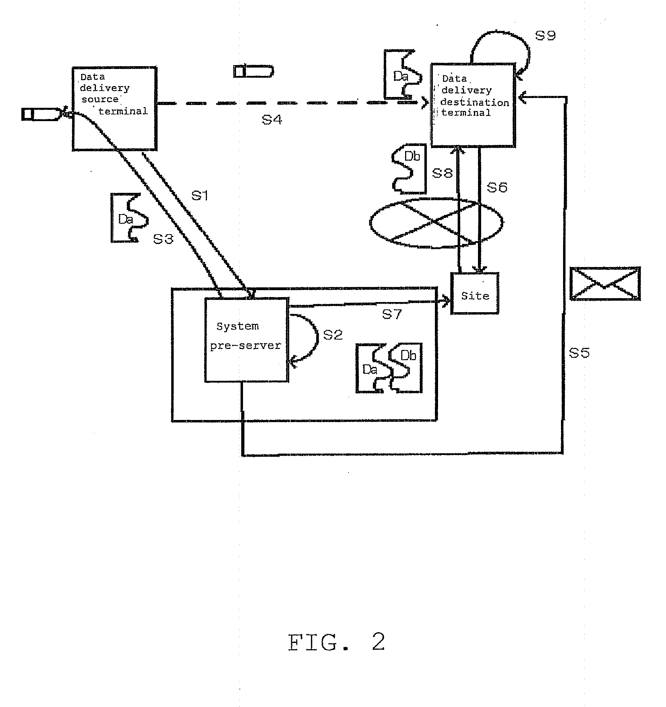

Outline of operation of the system in the embodiment will be described with reference to FIG. 2.
An operator of a data delivery company transmits a request for extracting necessary information to the secret information management system 2 via the data delivery source terminal 1 (step S1). The necessary information denotes information requested by a delivery destination such as a direct mail dispatcher.

The system pre-server 4 extracts requested information data, expands it on the memory, and performs secret sharing process again on the expanded information data to divide the data into two or more data pieces (step S2). For convenience of explanation, it is assumed that data is divided into two data pieces Da and Db.

The data piece (Da) as one of the divided data pieces is downloaded by the data delivery source terminal 2 and written into the nonvolatile area in the dedicated USB memory (step S3). The dedicated USB memory 12 is delivered to the delivery destination by means such as a package delivery service (step S4).

The system pre-server 4 transmits an electronic mail to which a file in which the URL of the dedicated web site 5 for downloading the data piece Db is written is attached to the delivery destination (step S5).

When an operator at the delivery destination refers to the URL written in the file attached to the received electronic mail and accesses the web site 5 dedicated to downloading (step S6), the system pre-server 4 uploads the data piece Db to the dedicated web site 5 (step S7), and the data delivery destination terminal 3 downloads Db (step S8). By the data restoring function of the USB memory 12, the original information data to be delivered is restored in the volatile area from the data pieces Da and Db (step S9). To make the USB memory 12 realize the restoring function, data restoring software has to be stored in the nonvolatile area or a hardware configuration for restoring data has to be included. Handling of restored data is out of the scope of the present invention.
It is assumed that the USB memory 12 is connected to the delivery destination terminal 3 before the data piece Db is downloaded (step S8). In FIG. 2, any of the timing of reception of the USB memory 12 from the delivery source (step S4) and the timing of reception of a mail from the system pre-server 4 (step S5) may come first.

### 3. Details of Operation of System

The operation of the system will be described from the process on the data delivery source terminal 1 side.
An operator having a predetermined authority operates the data delivery source terminal 1 via input means such as a keyboard and a mouse. It is assumed that processes for acknowledging the authority of the operator and the like are performed by a known method.

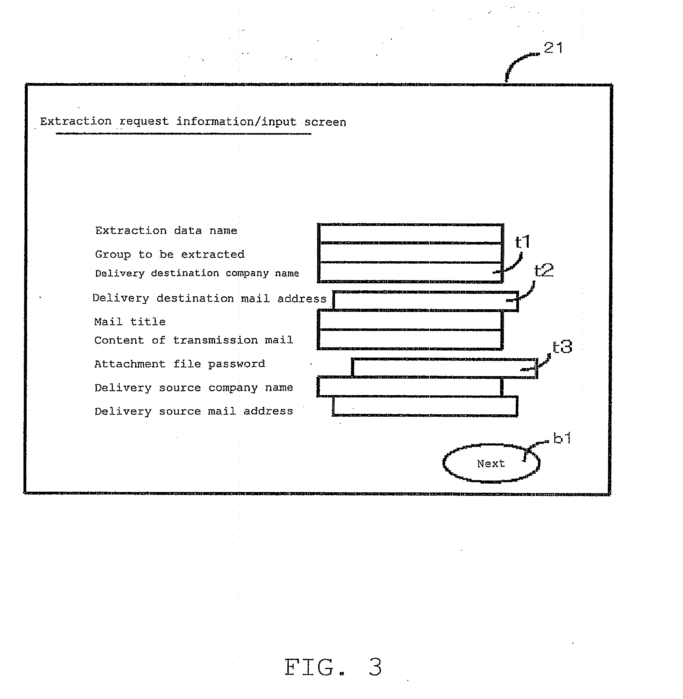

To request the secret information management system 2 to extract secret information, the data extraction requesting means 14 of the data delivery source terminal 1 has to transmit a predetermined item to the secret information management system 2 via the input means. An example of an input screen 21 at this time is shown in FIG. 3. Items shown in FIG. 3 are just an example.
In a delivery destination company name field t1, the name of the delivery destination of secret information is entered.
In a delivery destination mail address field t2, a mail address of the operator at the delivery destination is entered.
In an attached file password field t3, a password for decompressing the compressed attached file at the delivery destination.

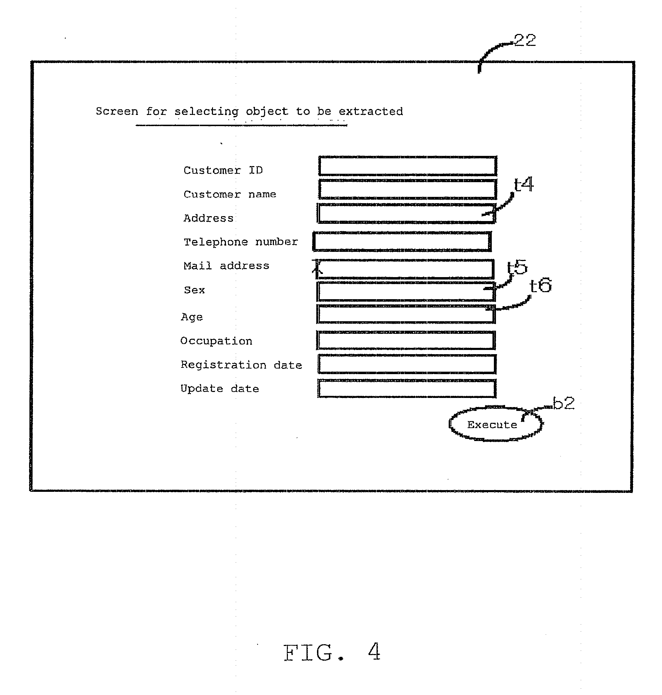

After completion of entry of the necessary items, a "next" button b1 is clicked with the mouse, and the information is transmitted to the system pre-server 4. In the screen of the data delivery source terminal 1, a screen 22 for selecting an object to be extracted next is displayed. With the screen, an item which can be an object to be extracted from the secret information management system 2 is designated. FIG. 4 shows a display example of the screen.
For example, it is assumed that it is desired to dispatch direct mails to women in their twenties living in Minato-ku, Tokyo as delivery destinations. In this case, it is sufficient for the delivery source to enter "Minato-ku, Tokyo" in an address field t4, "female" in a sex field t5, and "20-29" in an age field t6. After entering data in the necessary item fields, an "execution" button b2 is clicked with the mouse to transmit the conditions to the secret information management system 2 side.

In the system pre-server 4, the data extracting/re-diving means 8 retrieves secret information matching the designated conditions. It is assumed that the number of individuals matching the conditions is N and one piece of data corresponds to one person. In the secret information management system, data pieces are dispersedly stored. Therefore, data pieces constructing each data piece are extracted and restored. N data pieces restored are combined and expanded on the memory but are not stored in a hard disk. The data expanded on the memory is information data to be delivered which is provided to the delivery destination. The information data to be delivered is divided into two or more data pieces on the basis of the secret sharing scheme. For convenience of explanation, it is assumed that the data is divided into two data pieces Da and Db.
After the division, the information data to be delivered is eliminated from the memory and, without being stored in a hard disk or the like of the system pre-server 4, dispersedly stored in the secret information management system 2.

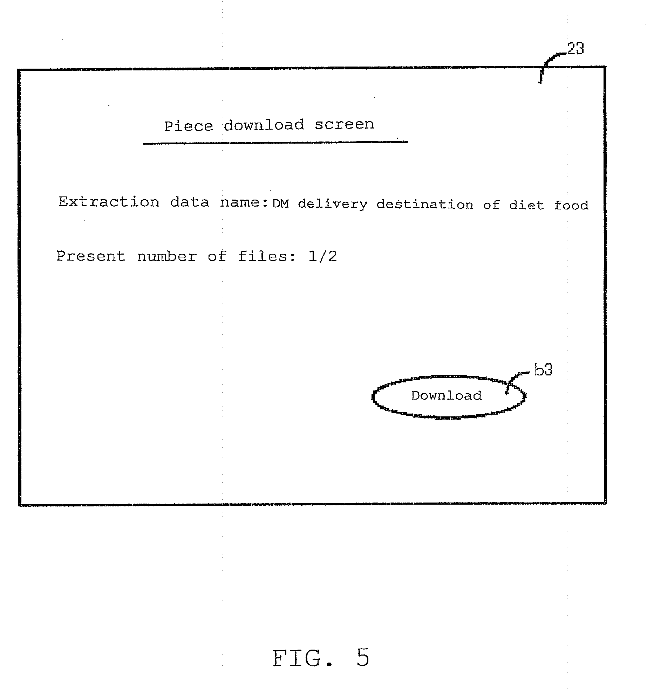

After completion of the data extracting process of the data extracting/re-dividing means 8 in the system pre-server 4, the system pre-server 4 displays a piece download screen 23 as shown in FIG. 5 on the screen of the data delivery source terminal 1.
When subject of data or the like is checked on the screen 23 and a "piece download" button b3 is clicked, the data piece writing means 15 of the data delivery source terminal 1 can download the data piece Da dispersedly stored in the secret information management system 2. It should be noted here that Da is not temporarily stored in the system pre-server 4 but, after reception of the download request, the data piece delivering means 9 extracts Da from the storage medium in which Da is dispersedly stored, and transmits it to the data delivery source terminal 1.

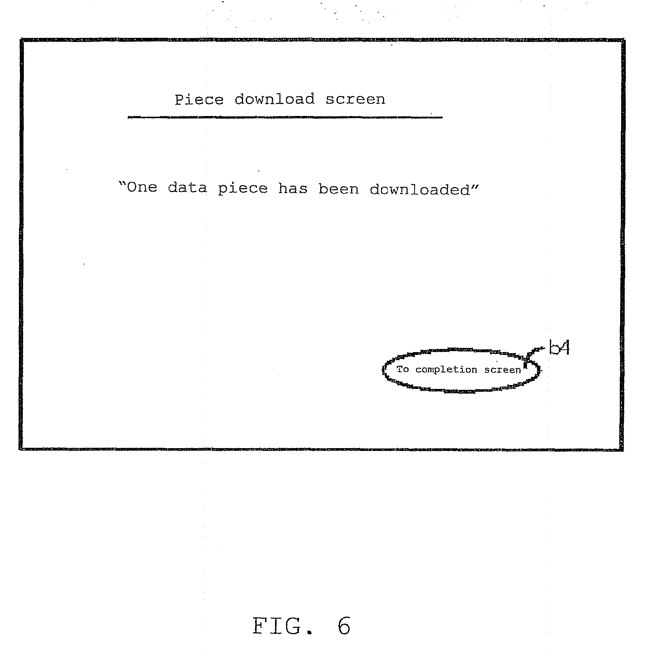

After completion of downloading of the data piece, a screen as shown in FIG. 6 is displayed.
When a "to completion screen" button b4 is clicked on the screen, the mail generating/transmitting means 10 in the system pre-server 4 transmits a mail to a person in charge at the delivery destination and also displays a download completion screen (not shown) on the data delivery source terminal 1.
The data piece writing means 15 in the data delivery source terminal 1 writes the downloaded data piece Da into the nonvolatile area in the USB memory 12. The downloaded data piece Da is desirably written directly in the USB memory 12 without being written in the memory of the data delivery source terminal 1 or a storage medium such as a hard disk. The delivery source detaches the USB memory 12 from the storage medium interface means 13 of the data delivery source terminal 1 and delivers it to the delivery destination by using a package delivery service or the like. The delivery means is out of the scope of the present invention and may be any means.

The operation of the system pre-server 4 of the secret information management system 2 in the case where the "to completion screen" button b4 in FIG. 6 is clicked with the mouse of the data delivery source terminal 1 will be described.
In the system pre-server 4, at the time point when downloading of the data piece by the data delivery source terminal 1 completes, a spare data piece group is generated. When a data piece subjected to secret sharing is obtained at the delivery source or delivery destination and, after that, the data piece is lost due to missing, destruction, or the like, in the embodiment, the same data piece cannot be downloaded again, so that the original information data cannot be restored. Consequently, the system pre-server 4 performs a data re-generating process to generate a spare data piece group in advance.

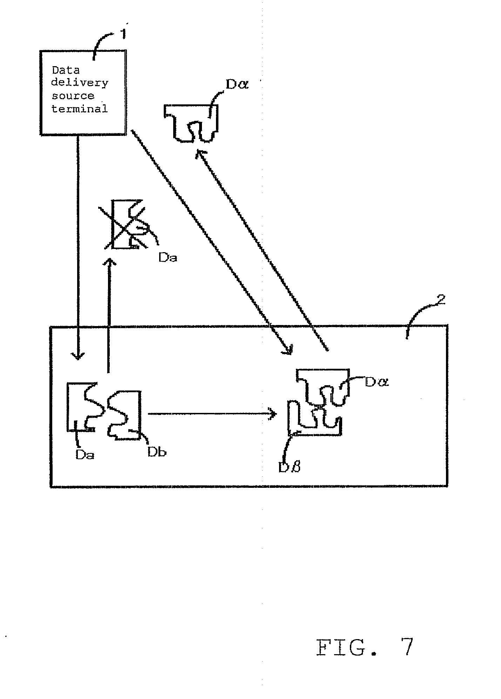

If a data piece is lost or broken, the delivery source and the delivery destination obtain a spare data piece and restore the original information data using the spare data piece. When the data pieces are Da and Db and spare data pieces are Dα, and Dβ, data can be restored only from the combination of (Da and Db) and (Dα and Dβ) and cannot be restored by any of combinations of (Da, Dα) (Da, Dβ), (Db, Dα), and (Db, Dβ).
For example, it is assumed that the downloaded data piece Da is destroyed/lost as shown in FIG. 7. The data delivery source terminal 1 requests re-downloading to the secret information management system 2, and the system pre-server 4 transmits the spare data piece Dα. After completion of acquisition of the spare data piece by the data delivery source terminal 1, the system 2 generates another spare data piece group. In the case of FIG. 7, restoration using the lost piece group (Da, Db) is impossible.

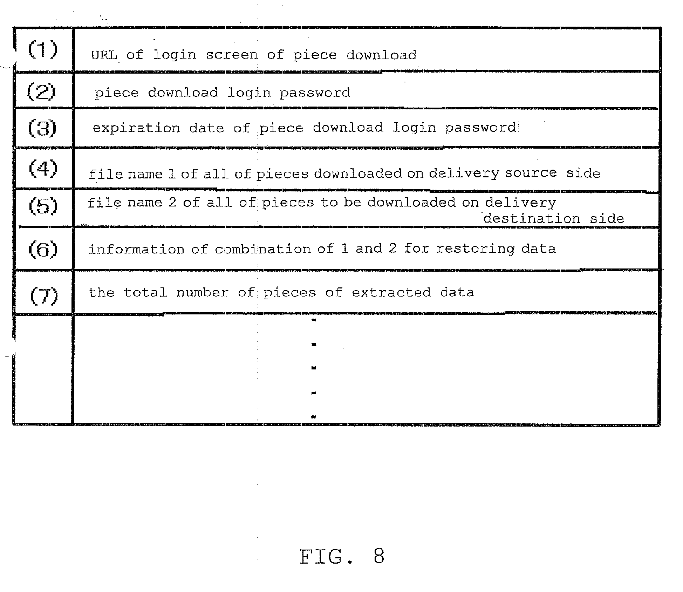

After completion of downloading of the data piece Da to the data delivery source terminal 1, the mail generating/transmitting means 9 of the system pre-server 4 transmits a file in which items as shown in FIG. 8 are written in the form of attachment to an electronic mail to a person in charge at the delivery destination. The items are information necessary for the data delivery destination terminal 3 to download a data piece. It is not proper to write the items in text of an electronic mail from the viewpoint of security. Consequently, the information is written in the file attached to the electronic mail. The information is encrypted and delivered to the delivery destination. The attachment file is compressed in the known zip form or the like, and encryption protection with a password is performed at the time of compression. The password used here is an attachment file password entered in the input field t3 in the screen 21 (FIG. 3) by the data delivery source terminal 1.

The reason why URL and the like is notified from the secret information management system 2 side directly to the data delivery destination terminal 3 side not through the data delivery source terminal 1 is to ensure the purpose of prevention of leakage of information. With the arrangement, the original information data cannot be restored at the delivery source. Recently, secret information leak cases often occur. The cases are often caused by insiders such as employees or the like. It affects company's credit, and the company may be liable for damages. In the system of the embodiment, the operator at the information delivery source cannot know the URL of the site 5 dedicated to downloading, so that there is no possibility of information leakage caused by an insider of the delivery source.

In FIG. 8, item number (4) shows a file name given to the data piece Da, and item number (5) shows a file name given to the data piece Db.
Item number (6) indicates combination information of Da and Db.

Next, the operation of the system from the data delivery destination terminal 3 side will be described.
It is assumed that the USB memory 12 is delivered from the delivery source to the delivery destination by a package delivery service or the like. It is also assumed that the USB memory 12 is attached to the storage medium interface means 17 of the data delivery destination terminal 3, and data can be input/output to/from the USB memory 12.

The URL extracting means 18 in the data delivery destination terminal 3 decodes the attachment file of the electronic mail received from the system pre-server 4 and extracts the URL of the dedicated download site (the item (1) in FIG. 8) and the login password (the item (2) in FIG. 8). It is assumed that a password used for decoding the attachment file is notified to the delivery destination by some means from the delivery source. Alternatively, information peculiar to the USB memory written in the invisible area in the USB memory 12 or the like may be used as a password.

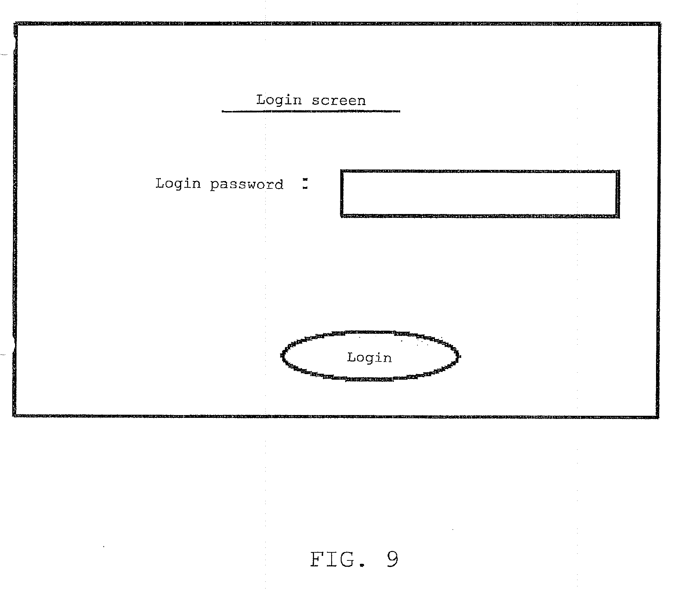

When the dedicated web site 5 is accessed by using the URL, the download login screen as shown in FIG. 9 is displayed. Entry of a login password is prompted. When the login password extracted from the attachment file is entered and the login button is clicked, the screen shifts to a download screen (which is not shown since it is almost the same as that in FIG. 5).
The login password is a password with a time limit, and expiration is set. A condition under which the login password becomes invalid is lapse of predetermined expiration or when downloading of a target data piece completes.
When any of the combination (Da, Db) is lost, destroyed, or the like, the spare data pieces (Dα, Dβ) have to be downloaded again. In this case, after completion of downloading of the spare data piece by the delivery source, a mail is transmitted from the system pre-server 4, and a new file is attached. Consequently, the attachment file sent at the time of downloading of last time becomes invalid.

When the data delivery destination terminal 3 succeeds an access to the dedicated web site 5, the system pre-server 4 extracts the data piece Db downloaded by the data piece obtaining means 19 in the delivery destination terminal 3 from the secret information management system 2, and uploads it to the web site 5 dedicated to downloading. It should be noted that the data piece Db is not temporarily stored in the system pre-server 4.
As a communication protocol used by the data delivery destination terminal 3 to access the dedicated web site 5, HTTPS is used. To the end of the URL, information peculiar to the mail is added (for example, https://www.xxx.com/xxx/xxxxxx.do?p=xxxxxxxx) so that only an access from the added URL can log in the site.
Desirably, a random and unconditional name in which characters and numerals mixedly exist is given to a directory just above the place where the download file is put to give consideration not to make users always conscious of a predetermined directory name.

When the data piece obtaining means 19 in the data delivery destination terminal 3 logs in the dedicated web site 5, the target data piece Db is extracted and transmitted onto the web side 5 by the system pre-server 4 and is allowed to be downloaded only once.
The downloaded data piece Db is stored in an arbitrary place in the data delivery destination terminal 3, and a nonvolatile area in the dedicated USB memory 12 is desirable. The data piece obtaining means 19 may designate the nonvolatile area in the dedicated USB memory 12 and download the data piece so that the data piece is not recorded in a nonvolatile storage medium such as a hard disk of the data delivery destination terminal 3.

As described above, the data pieces Da and Db necessary to restore the original information data to be delivered are delivered to the delivery destination via different routes. In the case where the data pieces are lost, broken, or the like in one or both of the two routes, leakage of information to the outside does not occur. All of data pieces necessary for restoration get together only in the delivery destination terminal 3. In the case where leakage of information occurs, a leakage place can be narrowed.

The data piece Db is downloaded and, after that, erased from the dedicated web site 5. That is, the number of times of downloading data pieces is limited to one. If the data piece Db is lost or the like, the system pre-server 4 downloads a spare data piece prepared.
When there is no possibility that the data piece group is used, that is, when the data piece group has been downloaded, when the data piece group cannot be downloaded due to expiration, or when the spare data piece is downloaded so that the data pieces generated by the first division become unnecessary, the data pieces are erased from the secret information management system 2. Further, when the original data piece group is downloaded without any accident, there is no possibility that the spare data piece group is used. Consequently, the spare data piece group is also erased from the secret information management system 2.
Desirably, the system pre-server 4 can register data piece handling history on a storage medium connected, control not to permit downloading of the second time and, in the case where a data piece is lost, perform a process of invalidating the data piece.

Both of the data piece Db downloaded from the dedicated web site 5 and the data piece Da stored in the nonvolatile area in the USB memory 12 are expanded in the volatile area, and restored in the volatile area by using a restoration program stored in the USB memory 12. The restoration program is deleted immediately after the data piece Da in the nonvolatile area is restored. In the case where a program for restoring original information data is stored in the USB memory 12, the program corresponds to data restoring means in Claim 1.
Since the secret information restoring process can be executed in the dedicated USB memory 12 as described above, the operator at the delivery destination can restore/output data without visually recognizing the data. This is one of measures for prevention of information leakage caused by an insider.

The restored information data is output to a file. The file is, for example, a plain text file in the CSV format in which confidential information (customer ID, customer name, birth date, postal code, address, and the like) of one customer is written in one line. By the process, desired secret information data can be obtained in the delivery destination.
The history of operations such as downloading of a data piece in the delivery source and restoration in the delivery destination is desirably recorded in the invisible area in the USB memory 12.

### 4. Other Embodiments

If the USB memory in the foregoing embodiment is also provided with the function of a USB key, control of the data delivery source terminal 1 and the data delivery destination terminal 3 by the thin client function becomes possible. By attaching the USB key to the terminal, a dedicated OS is started. In the OS, by inhibiting writing to a medium other than the dedicated USB memory, permitting only writing from a program to a memory area in the USB key and, in the case where the USB key is detached during process, by locking the screen, a part of information leakage prevention can be performed. By setting expiration for the USB key itself, safety can be further increased.

In the foregoing embodiment, it is assumed that a dedicated USB memory is used as a portable storage medium.
However, the portable storage medium is not limited to a dedicated USB memory but may be an external hard disk, an MO, or the like as long as it is a portable storage medium. A part of data pieces can be delivered to a delivery destination by means using manpower such as a package delivery service, and a plurality of delivery routes can be realized. A normal USB memory having no volatile area may be also used.

In the foregoing embodiment, a program for the restoring process is stored in the dedicated USB memory and, to prevent the data piece Da from being taken to the outside of the USB memory, the restoring process is executed on the volatile area in the USB memory. However, the program for the restoring process may be obtained by a method of downloading the program together with the data piece Db from the dedicated site. Under condition that the memory is cleared after completion of the restoring process, the data piece Da may be expanded on the memory in the data delivery destination terminal 3.

### Industrial Applicability

In businesses of providing secret information in response to a request from a customer, the technique of the present invention can be used.

### Brief Description of Drawings

FIG. 1 is a diagram showing a system configuration of an embodiment.
FIG. 2 is a diagram showing process outline of a system of the embodiment.
FIG. 3 is a diagram showing a display example of a screen of a data delivery source terminal of the embodiment.
FIG. 4 is a diagram showing a display example of the screen of the data delivery source terminal of the embodiment.
FIG. 5 is a diagram showing a display example of the screen of the data delivery source terminal of the embodiment.
FIG. 6 is a diagram showing a display example of the screen of the data delivery source terminal of the embodiment.
FIG. 7 is a diagram for explaining that a data piece in the embodiment which is lost or the like is replaced with a spare data piece.
FIG. 8 is a diagram illustrating items written in a file attached to an electronic mail in the embodiment.
FIG. 9 is a diagram showing a display example of the screen of the data delivery destination terminal in the embodiment.
FIG. 10 is a system configuration diagram of a prior art.
FIG. 11 is a block diagram of the prior art.
FIG. 12 is a flowchart for explaining a data storing process of the prior art.
FIG. 13 is a flowchart for explaining a data obtaining process of the prior art.

### Description of Reference Numerals

- 1: data delivery source terminal
- 2: secret information management system
- 3: data delivery destination terminal
- 4: system pre-server
- 5: web site dedicated to downloading
- 8: data extracting/re-dividing means
- 9: data piece delivering means
- 10: mail generating/transmitting means
- 12: portable storage medium
- 13: storage medium interface means
- 14: data extraction requesting means
- 15: data piece writing means
- 17: storage medium interface means
- 18: URL extracting means
- 19: data piece obtaining means
- 20: data restoring means

## Claims

1. A secret information delivery system comprising:
a secret information management system for dividing secret information data into data pieces by a secret sharing scheme, storing the data pieces, and performing a process of restoring the original secret information data from the data pieces;
a data delivery source terminal for managing delivery of the secret information data stored in the secret information management system to a data delivery destination; and
a data delivery destination terminal for obtaining and restoring the data pieces of the secret information data stored in the secret information management system,
wherein the secret information management system includes a system pre-server,
the system pre-server comprises at least:
data extracting/re-dividing means, on receipt of a secret information extraction request from the data delivery source terminal, restoring data dispersedly stored in the secret information management system, combining one or more data pieces restored to generate information data to be delivered, and dividing the information data to be delivered into two or more data pieces on the basis of the secret sharing scheme;
data piece delivering means for transmitting a part of a group of data pieces constructing the information data to be delivered to the data delivery source terminal, and uploading the remaining data pieces to a web site dedicated to downloading; and
mail generating/transmitting means for transmitting an electronic mail that notifies of URL of the web site dedicated to downloading to the data delivery destination terminal,
the data delivery source terminal comprises at least:
input means;
screen displaying means;
communication interface means for connection to the system pre-server via a communication network;
storage medium interface means for connection to a portable storage medium having a nonvolatile area;
data extraction requesting means for requesting the system pre-server for information data to be delivered; and
data piece writing means for writing a data piece sent from the system pre-server to the nonvolatile area in the portable storage medium, and
the data delivery destination terminal comprises:
input means;
screen displaying means;
communication interface means for connection to the Internet;
storage medium interface means for connection to the portable storage medium;
URL extracting means for receiving an electronic mail transmitted from the system management server and extracting the URL of the web site dedicated to downloading;
data piece obtaining means for accessing the dedicated web site via the Internet and downloading a data piece; and
data restoring means for reading a data piece stored in the nonvolatile area in the portable storage medium and restoring the original information data to be delivered from the read data piece and the downloaded data piece.

2. The secret information delivery system according to claim 1, wherein to an electronic mail transmitted from the system pre-server to the data delivery destination terminal, an encrypted file in which the URL of the web site dedicated to downloading and a password necessary to access the dedicated web site are written is attached.

3. The secret information delivery system according to claim 1 or 2, wherein after a part of the group of data pieces obtained by dividing the information data to be delivered is transmitted to the data delivery source terminal, the system pre-server generates a spare data piece group by re-dividing the information data to be delivered.

4. The secret information delivery system according to any one of claims 1 to 3, wherein the portable storage medium is a USB memory including a nonvolatile area, a volatile area, and an invisible area.

5. The secret information delivery system according to claim 4, wherein the data restoring means is realized by loading a restoration program stored in the nonvolatile area to the volatile area and executing the restoration program, and
the data restoring means restores, on the volatile area, the original information data to be delivered from a data piece downloaded from the dedicated web site and a data piece stored in the nonvolatile area.

6. The secret information delivery system according to claim 4 or 5, wherein the portable storage medium has a function of a USB key.

7. A secret information delivery method for making a computer in a data delivery source handling secret information data and capable of accessing a secret information management system that manages dispersed secret information on the basis of a secret sharing scheme and receiving service provided by the system, safely deliver secret information data requested by a data delivery destination to a computer in the data delivery destination,
wherein when the computer in the delivery source accesses the secret information management system and requests for extraction of secret information data to be delivered to the computer in the delivery destination,
the secret information management system extracts the requested secret information data, divides it into two or more data pieces, transmits a part of the divided data pieces to the computer in the delivery source, and transmits an electronic mail for notifying of URL of a web site dedicated to download the remaining data pieces, to the computer in the delivery destination,
on the other hand, the computer in the delivery source records the data transmitted from the secret information management system to a portable storage medium, and
the computer in the delivery destination accesses the dedicated web site with the URL notified by the electronic mail, downloads the remaining information data, and restores the original secret information data from the downloaded data piece and the data piece recorded on the portable storage medium in a state where the computer is connected to the portable storage medium.
